# EUROPÄISCHE PATENTSCHRIFT

(11) **EP 0 520 249 B1**
(45) Veröffentlichungstag und Bekanntmachung des Hinweises auf die Patenterteilung: **28.02.1996**
(21) Anmeldenummer: 92109852.1
(22) Anmeldetag: 11.06.1992
(51) Int. Cl.: H01S 3/0975, H01S 3/03

(54) **Hochfrequenzangeregter Laser für hohe Eingangsleistungen, insbesondere CO2-Bandleiterlaser**
High frequency excited laser for high input power, in particular CO2 slab waveguide laser
Laser à haute puissance excité par haute fréquence, en particulier laser CO2 à guide à ruban

(30) Priorität: 27.06.1991 DE 4121306
(43) Veröffentlichungstag der Anmeldung: 30.12.1992
(73) Patentinhaber: CARL ZEISS JENA GmbH, D-07745 Jena (DE)
(72) Erfinder: Günther, Wolfgang, Dipl.-Ing., W-8000 München 83 (DE)
(74) Vertreter: Muhsfeldt, Willi

(56) Entgegenhaltungen:
- EP-A- 0 243 592
- EP-A- 0 305 893
- GB-A- 2 060 989
- REVIEW OF SCIENTIFIC INSTRUMENTS Bd. 55, Nr. 10, Oktober 1984, NEW-YORK Seiten 1539 - 1541; R.L. SINCLAIR ET AL:: 'RADIO FREQUENCY EXCITED CO2 WAVEGUIDE LASERS'

## Beschreibung

Hochfrequenzangeregter Laser für hohe Eingangsleistungen, insbesondere CO₂-Bandleiterlaser.

Die vorliegende Erfindung betrifft einen HF-angeregten Laser für hohe Eingangsleistungen, insbesondere einen CO₂-Bandleiterlaser nach dem Oberbegriff des Patentanspruchs 1. Ein derartiger Laser ist in EP-A-0 477 879 beschrieben. Außerdem ist ein Bandleiterlaser aus der DE-A- 37 29 053 bekannt.

Eine Anpaßeinheit dient bei hochfrequenzangeregten Lasern höherer Leistung, z. B. bei einer Eingangsleistung von mindestens einem kW, zur Transformation der Impedanz der das Plasma anregenden Elektroden auf die Ausgangsimpedanz des Generators, die in der Regel 50 Ohm beträgt, bei einer vorgegebenen Frequenz. Hierzu wurden bisher entweder zwei Kurzschlußleitungen im λ/4 Abstand in die Eingangsleitung geschaltet oder ein π-Glied mit fester Längsinduktivität und zwei variablen Querkapazitäten eingesetzt. Die Kurzschlußleitungen bedingen jedoch hohe Ströme und hohe Spannungen auf den 50-Ohm-Leitungen, während das π-Glied großvolumig aufgebaut werden muß.

Aus der EP-A-0 243 592 ist ein Gaslaser mit Hochfrequenzanregung mit einer aus einer Induktivität und Kapazität bestehenden Filterschaltung zur Impedanzanpassung bekannt. Dabei wird der Kondensator, welcher die Kapazität realisiert, aus einer elektrisch an Masse gelegten ersten Elektrode gebildet, welche das Lasergehäuse darstellt. Die zweite Elektrode des Kondensators ist im Inneren des Gehäuses angeordnet. Zur Einstellung der Kapazität wird eine Elektrode relativ zur anderen Elektrode radial verstellt. Die Induktivität der Impedanzanpassung wird durch eine längenveränderliche Spule realisiert.

Die Aufgabe, die der vorliegenden Erfindung zugrundeliegt, besteht in einem kompakten Aufbau eines Anpaßgliedes und gleichzeitig einer Minimierung der Strombelastung.

Diese Aufgabe wird bei einem Laser gemäß dem Oberbegriff durch die kennzeichnenden Merkmale des Patentanspruchs 1 gelöst.

Das L-C-Glied wirkt hier bei der vorgegebenen Frequenz als Resonanztransformator. Der spezielle Aufbau gewährleistet einen hochfrequenzdichten Abschluß des Lasers und einen hochfrequenzdichten Anschluß an ein Hochfrequenzkabel.

Vorteilhaft bildet der Innenleiter einen Bereich mit einem vergrößerten Durchmesser, wobei die Kapazität des Kondensators durch die axiale Lage des Gleitringes zu diesem Bereich bestimmt ist.

Eine optimale Raumausnutzung des vorhandenen Lasergehäuses ist ermöglicht, indem der Außenleiter koaxial zum Lasergehäuse und gegenüber diesem in axialer Richtung verschiebbar gestaltet ist, indem der Innenleiter isoliert durch eine Stirnplatte des Außenleiters hindurch geführt ist, indem der Innenleiter hinter dieser Stirnplatte ein in axialer Richtung bewegliches Bindeglied enthält und indem die axiale Lage des Außenleiters gegenüber dem Gehäuse die eingestellte Induktivität bestimmt. Dabei umschließt vorteilhaft der Außenleiter den Innenleiter bis zu einem Steckeranschluß für einen Koaxialstecker hin vollständig und grenzt an die Gehäusewand hochfrenquenzdicht an. So ist auf einfache Weise der Laser hochfrequenzdicht mit einem Anschlußkabel zu verbinden.

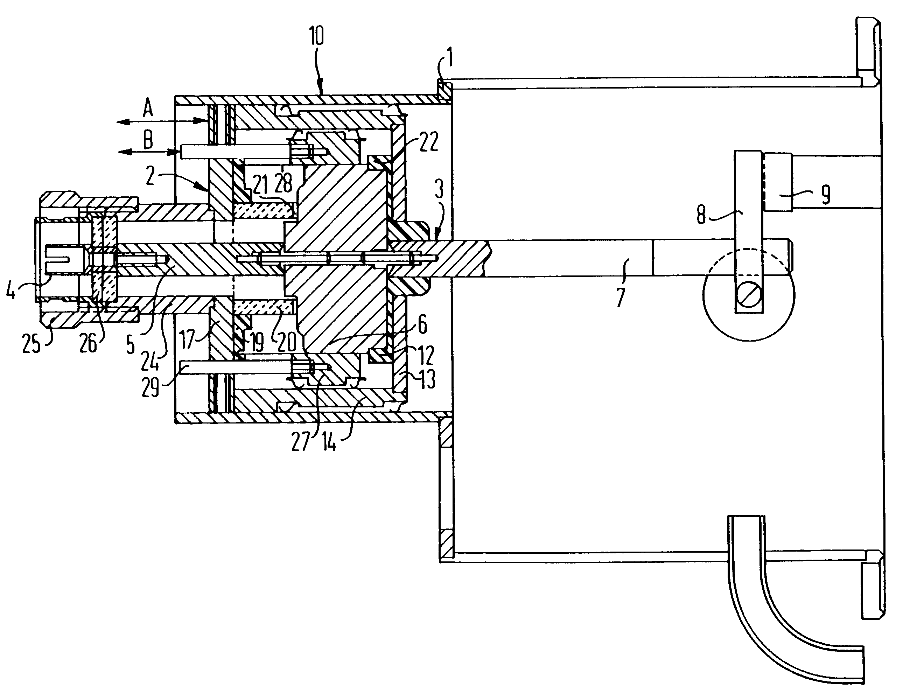

Die Erfindung wird nun anhand einer Figur näher erläutert. Sie ist nicht auf das in der Figur gezeigte Beispiel beschränkt.

In einem Lasergehäuse 1, 10 ist eine Anpaßeinheit 2 untergebracht. Die Anpaßeinheit 2 besteht aus einem L-C-Glied, wobei eine Induktivität durch die gesamte Länge der HF-Zu- und -Ableitung zum und vom in der Zeichnung nicht dargestellten Gasentladungsraum gebildet ist. Die HF-Zuleitung ist als Innenleiter 3 ausgebildet, welcher sich aus einem Steckerinnenkontakt 4, einem Bolzen 5, einem Kondensatorelektrodenzylinder 6 und einem in seiner elektrisch wirksamen Länge variablen Innenleiter 7 zusammensetzt und über ein Bindeglied 8 mit einem Laserelektrodenanschluß 9 in Verbindung steht und gegenüber diesem in axialer Richtung verschiebbar ist.

Die Stirnseite des Kondensatorelektrodenzylinders 6 ist mit dem variablen Innenleiter 7 verbunden und durch ein Isolierteil 12 aus Kunststoff, vorzugsweise aus Teflon R, gegenüber einer Stirnplatte 13 des durch einen Außenzylinder 14 gebildeten Außenleiters 10 isoliert und gegen diese Stirnplatte 13 mechanisch abgestützt. Der Außenzylinder 14 ist gegenüber dem Lasergehäuse 1 in axialer Richtung verschiebbar ausgebildet und bildet zum Lasergehäuse 1 einen hochfrequenzdichten Abschluß.

Die Stirnplatte 13 ist mit dem Außenzylinder 14 verbunden, welcher den Kondensatorelektrodenzylinder 6 in axialer Richtung überragt und über eine Außenplatte 17 und ein daran angrenzendes Außenrohr 24 vervollständigt wird. Das Außenrohr 24 ist in seinem Endbereich mit dem Außenkontaktring 25 verbunden und über eine Isolierscheibe 26 gegen den Innenleiter 3 abgestützt. Der Außenkontaktring 25 dient zur Kontaktgabe gegenüber einem Außenkontakt eines nicht dargestellten Koaxialsteckers, dessen abgeschirmter Kontakt den Steckerinnenkontakt 4 des Innenleiters 3 kontaktiert.

Im Außenzylinder 14 ist ein Gleitring 27 in axialer Richtung verschiebbar angeordnet. Der Gleitring 27 ist mit dem Außenzylinder 14 über Kontaktfedern abgestützt und vom Innenleiter 3 durch einen Dielektrikumszylinder 28 getrennt. Der Dielektrikumszylinder 28 liegt auf einem Isolierstoff-Flansch 19 auf, der vorzugsweise aus Teflon besteht. Der Isolierstofflansch 19 umschließt einen Isolierzylinder 20, der vorzugsweise aus Keramik besteht und sich zum Kondensatorelektrodenzylinder 6 erstreckt. Der Dielektrikumszylinder 28 grenzt an einen Anschlagring 22 des Isolierteiles 12 an, wobei der Anschlagring 22 als Anschlag für die Verschiebemöglichkeit des Gleitringes 27 dient. Der Gleitring 27 wird von außen durch Verschiebung von Bolzen 29 in Pfeilrichtung B eingestellt. Nach dem Abgleich können die Bolzen 29 gegenüber der Außenplatte 17 fixiert und dann abgetrennt werden, da eine Nachjustierung nicht vorgesehen ist. Nach dem Abgleich der Induktivität durch Verschieben der gesamten Anpaßeinheit 2 in Pfeilrichtung A kann auch die Stirnplatte 13 gegenüber dem Lasergehäuse 1 fixiert werden.

Der Isolierzylinder 20 ist in Verlängerung des Außenrohrs 24 zwischen der Außenplatte 17 und dem Kondensatorelektrodenzylinder 6 angeordnet und drückt über eine Wellfeder 21 den Kondensatorelektrodenzylinder 6 gegen das Isolierteil 12 und dieses gegen die Stirnplatte 13.

## Patentansprüche

1. Hochfrequenzangeregter Laser für hohe Eingangsleistungen, insbesondere CO₂-Bandleiterlaser, welcher ein Lasergehäuse und eine in das Lasergehäuse integrierte Anpaßeinheit zur Anpassung der Impedanz an die Impedanz einer Hochfrequenzeinspeisung enthält, dadurch gekennzeichnet,
daß die Anpaßeinheit (2) koaxial zum Lasergehäuse (1,10) und gegenüber diesem in axialer Richtung verschiebbar gestaltet ist und ein L-C-Glied enthält, welches als Resonanztransformator wirkt, wobei die Induktivität L und die Kapazität C variabel sind,
daß die Induktivität durch Veränderung der Länge der galvanisch leitenden Teile (3; 7) zwischen einer Hochfrequenzzuleitung (4,25) und einer Hochfrequenzableitung (9) eines Hochfrequenzanschlusses eingestellt ist,
daß der Kondensator durch einen Außenleiter (14) und einen zu diesem koaxialen Innenleiter (3) aufgebaut ist, wobei der Innenleiter (3) einen Kondensatorelektrodenzylinder (6) mit vergrößertem Durchmesser besitzt, daß mit dem Außenleiter (14) ein koaxialer, in axialer Richtung von außen bewegbarer Gleitring (27) in Verbindung steht, welcher an ein Dielektrikum (28) zwischen dem Außenleiter (14) und dem Innenleiter (3) angrenzt und durch dessen axiale Lage relativ zum Kondensatorelektrodenzylinder (6) die Kapazität C des Kondensators bestimmt ist
und daß der Außenleiter (14) den Innenleiter (3) trägt.

2. Laser nach Anspruch 1, dadurch gekennzeichnet, daß der Innenleiter (3) isoliert durch eine Stirnplatte (13) des Außenleiters (14) hindurchgeführt ist, daß der Innenleiter (3) hinter dieser Stirnplatte (13) ein in axialer Richtung bewegliches oder verformbares Bindeglied (8) enthält und daß die axiale Lage des Außenleiters (14) gegenüber dem Lasergehäuse (1) die eingestellte Induktivität bestimmt.

3. Laser nach einem der Ansprüche 1 und 2, dadurch gekennzeichnet, daß der Außenleiter (14) den Innenleiter (3) bis zu einem Steckeranschluß für einen Koaxialstecker hin vollständig umhüllt und HF-dicht abschirmt und auch an das Lasergehäuse (1,10) HF-dicht angrenzt.

## Claims

1. Radio-frequency-excited laser for high input powers, in particular CO₂ ribbon guide laser, which contains a laser housing and a matching unit, integrated into the laser housing, for matching the impedance to the impedance of a radio-frequency infeed, characterized in that the matching unit (2) is configured so as to be displaceable coaxially with respect to the laser housing (1, 10) and in the axial direction with respect to the latter, and contains an L-C element which acts as a resonant transformer, the inductance L and the capacitance C being variable, in that the inductance is set by varying the length of the electrically conducting parts (3; 7) between a radio-frequency supply line (4, 25) and a radio-frequency output line (9) of a radio-frequency connection, in that the capacitor is constructed from an outer conductor (14) and an inner conductor (3) which is coaxial thereto, the inner conductor (3) having a capacitor electrode cylinder (6) with an enlarged diameter, in that there is connected to the outer conductor (14) a coaxial sliding ring (27), which can be moved in the axial direction from the outside, adjoins a dielectric (28) between the outer conductor (14) and the inner conductor (3) and by means of whose axial position relative to the capacitor electrode cylinder (6) the capacitance C of the capacitor is determined, and in that the outer conductor (14) supports the inner conductor (3).

2. Laser according to Claim 1, characterized in that the inner conductor (3) is led in an insulated manner through an end plate (13) of the outer conductor (14), in that, behind this end plate (13), the inner conductor (3) contains a joining element (8) which can be moved or deformed in the axial direction, and in that the axial position of the outer conductor (14) with respect to the laser housing (1) determines the inductance set.

3. Laser according to one of Claims 1 and 2, characterized in that the outer conductor (14) completely shrouds the inner conductor (3) as far as a plug connection for a coaxial plug and screens it in an RF-tight manner and also adjoins the laser housing (1, 10) in an RF-tight manner.

## Revendications

1. Laser à grandes puissances d'entrée excité à haute fréquence, notamment laser CO₂ à guide à ruban, qui comprend un corps de laser et une unité d'adaptation intégrée au boîtier de laser et destinée à adapter l'impédance à l'impédance d'une alimentation haute fréquence, caractérisé en ce que
l'unité (2) d'adaptation est formée coaxialement au boîtier (1,10) de laser et de sorte à pouvoir être déplacée par rapport à ce boîtier dans la direction axiale et comprend un circuit L-C, qui agit comme transformateur à résonance, l'inductance L et la capacité C étant variables,
l'inductance est réglée par modification de la longueur des parties (3 ; 7) galvaniquement conductrices entre un conducteur (14, 25) d'alimentation en haute fréquence et une ligne (9) de départ haute fréquence d'un raccordement haute fréquence,
le condensateur est constitué d'un conducteur extérieur (14) et d'un conducteur intérieur (3) de même axe que celui-ci, le conducteur intérieur (3) comprenant un cylindre (6) d'électrode du condensateur de diamètre plus grand, un anneau glissant (27), qui a le même axe que le conducteur extérieur (14), qui peut être déplacé de l'extérieur en direction axiale, qui est adjacent à un diélectrique (28) entre le conducteur extérieur (14) et le conducteur intérieur (3) et dont la position axiale par rapport au cylindre (6) d'électrode du condensateur détermine la capacité C du condensateur, est en contact avec le conducteur extérieur (14) et
le conducteur extérieur (14) porte le conducteur intérieur (3).

2. Laser suivant la revendication 1, caractérisé en ce que le conducteur intérieur (3) passe de manière isolée dans une plaque (13) frontale du conducteur extérieur (14), le conducteur intérieur (3) comporte, derrière cette plaque (13) frontale une pièce (8) de liaison mobile en direction axiale ou pouvant être déformée et la position axiale du conducteur extérieur (14) par rapport au corps (1) du laser détermine l'inductance réglée.

3. Laser suivant l'une des revendications 1 et 2, caractérisé en ce que le conducteur (14) extérieur enveloppe complètement le conducteur intérieur (3) jusqu'à une borne d'enfichage d'une fiche coaxiale, fait écran en protégeant des hautes fréquences et est adjacent également en protégeant des hautes fréquences, au corps (1,10) du laser.
